# EUROPEAN PATENT SPECIFICATION

(11) **EP 3 703 446 B1**
(45) Date of publication and mention of the grant of the patent: **15.06.2022**
(21) Application number: 17932291.2
(22) Date of filing: 16.11.2017
(51) Int. Cl.: H04W 72/04, H04W 72/02, H04W 8/22

(54) **WIRELESS COMMUNICATION METHOD, TERMINAL DEVICE AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF TERMINAL ET DISPOSITIF DE RÉSEAU

(43) Date of publication of application: 02.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Manitz Finsterwald Patent- und Rechtsanwaltspartnerschaft mbB
(86) International application number: PCT/CN2017/111370
(87) International publication number: WO 2019/095212

(56) References cited:
- EP-A1- 2 151 954
- EP-A1- 3 668 217
- WO-A1-2014/112848
- CN-A- 101 772 173
- CN-A- 101 772 173
- CN-A- 106 664 191
- CN-A- 106 664 191
- CN-A- 107 277 851
- HUAWEI ET AL: "Handling of UE capability related parts in TS38.331", 3GPP DRAFT; R2-1709622 HANDLING OF UE CAPABILITY RELATED PARTS IN TS38.331 V01, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Berlin, Germany; 20170821 - 20170825 20 August 2017 (2017-08-20), XP051319337, Retrieved from the Internet: URL:http://www.3gpp.org/ftp/Meetings_3GPP_ SYNC/RAN2/Docs/ [retrieved on 2017-08-20]
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD ; TECHNICAL SPECIFICATION ; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.7.1, 29 September 2017 (2017-09-29), pages 1-642, XP051337498, [retrieved on 2017-09-29]
- NTT DOCOMO ET AL: "RAN WG's progress on NR WI in the May meeting 2017", 3GPP DRAFT; R2-1706443, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 16 June 2017 (2017-06-16), XP051306466, Retrieved from the Internet: URL:http://www.3gpp.org/ftp/tsg_ran/WG2_RL 2/TSGR2_AHs/2017_06_NR/Docs/ [retrieved on 2017-06-16]

## Description

### TECHNICAL FIELD

The present application relate to the field of communication, and more particularly, to a wireless communication method, a terminal device and a network device.

### BACKGROUND

In the fifth-generation (5-Generation, 5G) New Radio (NR) communication, the maximum channel bandwidth for low-frequency carrier is 100 MHz, and the maximum channel bandwidth for high-frequency carrier is 400 MHz. In 5G NR communication, the power consumption of the terminal device is very high. If the terminal device continues transmitting data according to the maximum channel bandwidth of the low-frequency carrier or high-frequency carrier, it may inevitably cause a large energy loss, thereby being unable to meet the requirements for energy consumption of terminal device in the 5G NR communication. Related technologies are known from patent publication documents CN 106 664 191 A and WO 2014/112848 A1.

### SUMMARY

The invention is set out in the appended set of claims and described in the following with respect to the first to the fourth aspect.
Other aspects, i.e. fifth to ninth aspects, are not claimed and thus not part of the invention. These are only to be considered for illustrative purposes.
The embodiments of the present application provide a wireless communication method, a terminal device and a network device, in which the terminal device reports capability information of a maximum bandwidth supported by itself, and the network device can configure, for the terminal device, a bandwidth part for transmitting data according to the capability information of the maximum bandwidth supported by the terminal device. Accordingly, the terminal device can perform data transmission within a proper bandwidth range, thereby achieving the purpose of power saving.

According to a first aspect, embodiments of the present application provide a wireless communication method, including:
sending, by a terminal device, capability information of a maximum bandwidth supported by the terminal device to a network device.

Therefore, in the wireless communication method according to the embodiments of the present application, the terminal device reports capability information of a maximum bandwidth supported by itself, and the network device can configure, for the terminal device, a bandwidth part for transmitting data according to the capability information of the maximum bandwidth supported by the terminal device. Accordingly, the terminal device can perform data transmission within a proper bandwidth range, thereby achieving the purpose of power saving.

The method further includes:
sending, by the terminal device, indication information to the network device, the indication information being used for indicating a frequency range preferentially used by the terminal device and/or frequency priority information.

Furthermore, the terminal device reports indication information being indicative of the frequency range as preferentially used and/or the frequency priority information, such that the network device can configure, for the terminal device, the bandwidth part for transmitting data according to the capability information of the maximum bandwidth supported by the terminal device as well as the frequency range as preferentially used and/or the frequency priority information. Accordingly, the terminal device can perform data transmission within a proper bandwidth range, thereby achieving the purpose of power saving.

The method further includes:
receiving, by the terminal device, a bandwidth part (BWP) list and configuration information sent by the network device, the BWP list including at least one BWP and the configuration information indicating a BWP for transmitting data in the BWP list.
Optionally the BWP list includes a maximum bandwidth of the at least one BWP which is less than or equal to the capability information of the maximum bandwidth supported by the terminal device.

Optionally, according to an implementation manner of the first aspect the method further includes:
selecting, by the terminal device, a BWP from the BWP list for data transmission based on the configuration information.

According to a second aspect, embodiments of the present application provide a wireless communication method, including:
receiving, by a network device, capability information of a maximum bandwidth supported by a terminal device that is sent by the terminal device; and
configuring, by the network device, a bandwidth part (BWP) list and configuration information for the terminal device according to the capability information of the maximum bandwidth supported by the terminal device, the BWP list including at least one BWP and the configuration information indicating a BWP for transmitting data in the list.
   Optionally the BWP list includes a maximum bandwidth of the at least one BWP which is less than or equal to the capability information of the maximum bandwidth supported by the terminal device.

Therefore, in the wireless communication method according to the embodiments of the present application, the terminal device reports capability information of a maximum bandwidth supported by itself, and the network device can configure, for the terminal device, a bandwidth part for transmitting data according to the capability information of the maximum bandwidth supported by the terminal device. Accordingly, the terminal device can perform data transmission within a proper bandwidth range, thereby achieving the purpose of power saving.

The method further includes:
receiving, by the network device, indication information sent by the terminal device, the indication information being used for indicating a frequency range preferentially used by the terminal device and/or frequency priority information;
the configuring, by the network device, a bandwidth part (BWP) list for the terminal device according to the capability information of the maximum bandwidth supported by the terminal device includes:
configuring, by the network device, the BWP list for the terminal device according to the capability information of the maximum bandwidth supported by the terminal device and the indication information.

Furthermore, the terminal device reports indication information being indicative of the frequency range as preferentially used and/or the frequency priority information, such that the network device can configure, for the terminal device, the bandwidth part for transmitting data according to the capability information of the maximum bandwidth supported by the terminal device as well as the frequency range as preferentially used and/or the frequency priority information. Accordingly, the terminal device can perform data transmission within a proper bandwidth range, thereby achieving the purpose of power saving.

Optionally, according to an implementation manner of the second aspect, the configuring, by the network device, a bandwidth part (BWP) list for the terminal device according to the capability information of the maximum bandwidth supported by the terminal device includes:
configuring, by the network device, the BWP list and the configuration information for the terminal device through radio resource control (RRC) dedicated signaling.

According to a third aspect, embodiments of the present application provide a terminal device, including any module or unit for performing the method according to the first aspect or any one of the optional implementation manners of the first aspect.

According to a fourth aspect, embodiments of the present application provide a network device, including any module or unit for performing the method according to the second aspect or any one of the optional implementation manners of the second aspect.

According to a non-claimed fifth aspect, there is provided a terminal device. The terminal device includes a processor, a memory, and a communication interface. The processor is connected to the memory and the communication interface. The memory is configured to store instructions, the processor is configured to execute the instructions, and the communication interface is configured to communicate with other network elements under the control of the processor. When the processor executes the instructions stored in the memory, the execution causes the processor to execute the method according to the first aspect or any one of the optional implementation manners of the first aspect.

According to a non-claimed sixth aspect, there is provided a network device. The network device includes a processor, a memory, and a communication interface. The processor is connected to the memory and the communication interface. The memory is configured to store instructions, the processor is configured to execute the instructions, and the communication interface is configured to communicate with other network elements under the control of the processor. When the processor executes the instructions stored in the memory, the execution causes the processor to execute the method according to the second aspect or any one of the optional implementation manners of the second aspect.

According to a non-claimed seventh aspect, there is provided a computer storage medium, the computer storage medium stores program codes therein, and the program codes are used for instructing a computer to execute the method according to the first aspect or any one of the optional implementation manners of the first aspect.

According to a non-claimed aspect, there is provided a computer storage medium, the computer storage medium stores program codes therein, and the program codes are used for instructing a computer to execute the method according to the second aspect or any one of the optional implementation manners of the second aspect.

According to a non-claimed ninth aspect, there is provided a computer program product including instructions which, when running on a computer, causes a computer to execute the method according to any aspect as described above.

### BRIEF DESCRIPTION OF THE DRAWINGS

Fig. 1 is a schematic diagram illustrating an application scenario of embodiments of the application.
Fig. 2 is a schematic flowchart illustrating a wireless communication method according to an embodiment of the application.
Fig. 3 is a schematic flowchart illustrating a wireless communication method according to another embodiment of the application.
Fig. 4 is a schematic diagram illustrating a BWP provided according to an embodiment of the application.
Fig. 5 is a schematic diagram illustrating a BWP provided according to another embodiment of the application.
Fig. 6 is a schematic diagram illustrating a BWP provided according to yet another embodiment of the application.
Fig. 7 is a block diagram illustrating a terminal device according to an embodiment of the application.
Fig. 8 is a block diagram illustrating a network device according to an embodiment of the application.
Fig. 9 is a block diagram illustrating a wireless communication device according to an embodiment of the application.
Fig. 10 is a schematic structural diagram illustrating a system chip according to an embodiment of the application.

### DETAILED DESCRIPTION

The technical solutions in the embodiments of the present application will be clearly and completely described below with reference to the drawings in the embodiments of the present application.

The technical solutions in the embodiments of the present application can be applied to various communication systems, for example, Long Term Evolution (LTE) system, LTE Frequency Division Duplex (FDD) system, LTE Time Division Duplex, TDD) system, Universal Mobile Telecommunication System (UMTS), Worldwide Interoperability for Microwave Access (WiMAX) communication system, 5G communication system and the like.

The terminal device in the embodiments of the present application may refer to user equipment (User Equipment, UE), access terminal, user unit, user station, mobile station, mobile site, remote station, remote terminal, mobile device, user terminal, terminal, wireless communication equipment, user agent or user device. The access terminal may be a cell phone, a cordless phone, a Session Initiation Protocol (SIP) phone, a Wireless Local Loop (WLL) station, a Personal Digital Assistant (PDA), handheld device and computing device having wireless communication function, other processing device, vehicle-mounted device, wearable device connected to a wireless modem, a terminal device in 5G network, a terminal device in the future evolved Public Land Mobile Network (PLMN) and the like, which are not limited in the embodiments of the present application.

The present application describes various embodiments in conjunction with an access network device. The network device in the embodiment of the present application may be a device for communicating with a terminal device. The network device may be an evolutionary base station (Evolutional NodeB, eNB, or eNodeB) in LTE system, or a radio controller in Cloud Radio access network (CRAN) scenario, or the access network device may be a relay station, an access point, an in-vehicle device, a wearable device, a Next Generation Evolutional NodeB (NG-eNB), an access network device (e.g., gNB) in 5G network, an access network device in the future evolved Public Land Mobile Network (PLMN), which are not limited in the embodiments of the present application.

The present application describes various embodiments with reference to a core network device. The core network device in the embodiments of the present application may be a device that communicates with an access network device. The core network device may be a 5G core network device, such as an Access and Mobility Management Function (AMF), or may be an Evolved Packet Core (EPC) device, such as a Mobility Management Entity (MME).

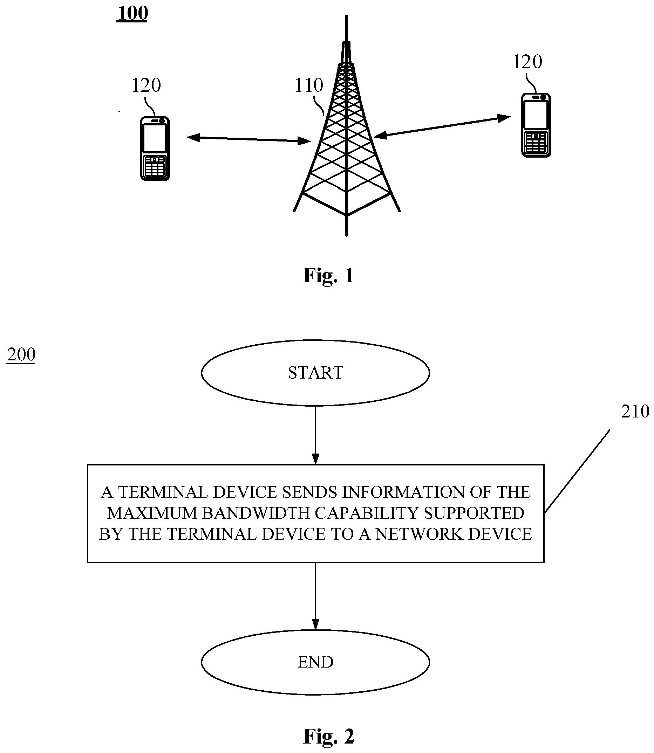

Fig. 1 exemplarily illustrates one network device and two terminal devices. Optionally, the wireless communication system 100 may include multiple network devices and the coverage range of each network device may include other numbers of terminal devices, which are not limited by embodiments of the application.

Optionally, the wireless communication system 100 may further include other network entities such as a network controller, a Mobility Management Entity (MME), and an Access and Mobility Management Function (AMF), which are not limited by embodiments of the application.

In addition, various aspects or features of the application may be implemented as a method, an apparatus, or an article of manufacture using standard programming and/or engineering techniques. The term "article of manufacture" as used in this application encompasses a computer program accessible from any computer-readable device, carrier, or medium. For example, the computer-readable medium may include, but not limited to, magnetic storage devices (for example, hard disks, floppy disks, or magnetic tapes, etc.), optical disks (for example, Compact Disc (CD), Digital Versatile Disc (DVD), etc.), smart cards and flash memory devices (for example, Erasable Programmable Read-Only Memory (EPROM), cards, sticks or key drives, etc.). In addition, the various storage medium described herein may refer to one or more devices and/or other machine-readable medium used for storing information. The term "machine-readable medium" may include, but not limited to, various medium capable of storing, containing, and/or carrying instruction(s) and/or data.

It should be understood that the terms "system" and "network" are often used interchangeably herein. The term "and/or" in this document is only a kind of association relationship describing related objects, which means that there can be three kinds of relationships, for example, A and/or B may refer to three cases: A exists alone, A and B exist simultaneously, and B exists alone. In addition, the character "/" in this article generally indicates that the related objects represent an "or" relationship.

Fig. 2 is a schematic flowchart illustrating a wireless communication method 200 according to an embodiment of the application. The method 200 is optionally appliable to the system as shown in Fig. 1, but is not limited thereto. The method 200 includes at least part of the following contents.

In 210, the terminal device sends capability information of a maximum bandwidth supported by the terminal device to the network device.

Optionally, the terminal device sends, before performing data transmission, the capability information of the maximum bandwidth supported by the terminal device to the network device.

Optionally, the terminal device sends, when initially accessing the network device, the capability information of the maximum bandwidth supported by the terminal device to the network device.

The network device configures a bandwidth part (BWP) list and configuration information for the terminal device according to the capability information of the maximum bandwidth supported by the terminal device, the BWP list including at least one BWP, and the configuration information indicating a BWP for transmitting data in the BWP list. Optionally, the BWP list includes a maximum bandwidth of the at least one BWP which is less than or equal to the capability information of the maximum bandwidth supported by the terminal device.
Optionally, the BWP supports adjustable bandwidth of the terminal device to achieve the purpose of power optimization of the terminal device and, at the same time, may support frequency division multiple access (FDMA) multiplexing of different air interface access technologies.

The method 200 may further includes:
the terminal device sends indication information to the network device, the indication information being used for indicating a frequency range to be used by the terminal device and/or frequency priority information.

For example, the terminal device preferentially uses the frequency range of 50 MHz to 100 MHz.

For another example, the terminal device preferentially uses a low frequency.

For another example, when the terminal device needs to perform an Ultra-Reliable and Low Latency Communication (URLLC) service, it preferably uses a high frequency.

Optionally, the network device configures the BWP list and the configuration information for the terminal device according to the capability information of the maximum bandwidth supported by the terminal device and the indication information.

Optionally, the BWP list may directly carry the configuration information.

Optionally, the method 200 further includes:
the terminal device receives the BWP list and the configuration information sent by the network device; and
the terminal device selects a BWP from the BWP list for data transmission based on the configuration information.

Therefore, in the wireless communication method according to the embodiments of the present application, the terminal device reports the capability information of the maximum bandwidth supported by itself, and the network device can configure, for the terminal device, the bandwidth part for transmitting data according to the capability information of the maximum bandwidth supported by the terminal device. Accordingly, the terminal device can perform data transmission within a proper bandwidth range, thereby achieving the purpose of power saving.

Furthermore, the terminal device reports indication information being indicative of the frequency range to be used and/or the frequency priority information, such that the network device can configure, for the terminal device, the bandwidth part for transmitting data according to the capability information of the maximum bandwidth supported by the terminal device as well as the frequency range as preferentially used and/or the frequency priority information. Accordingly, the terminal device can perform data transmission within a proper bandwidth range, thereby achieving the purpose of power saving.

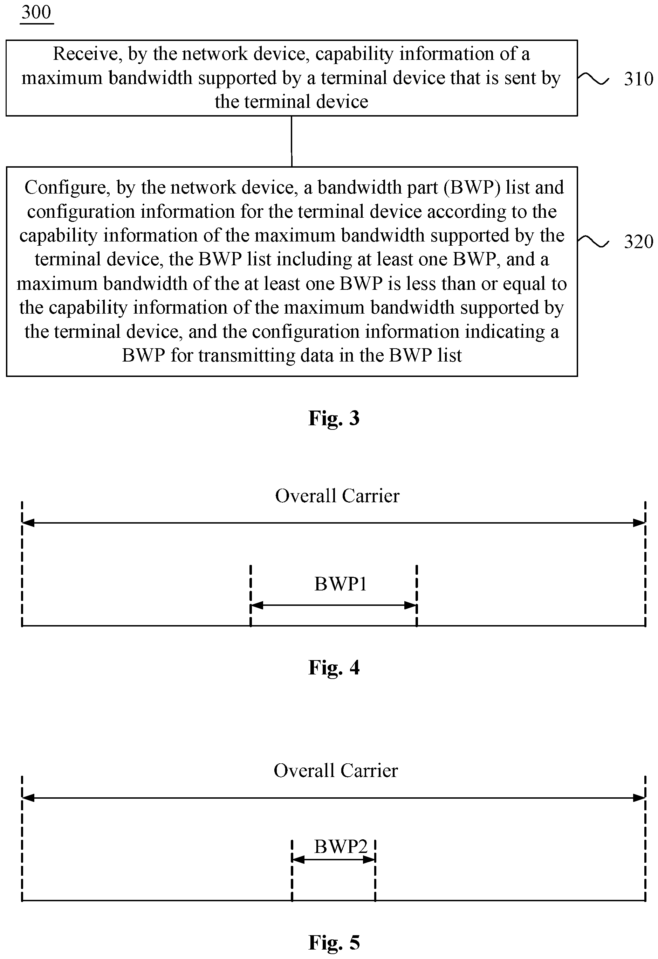

Fig. 3 is a schematic flowchart illustrating a wireless communication method 300 according to an embodiment of the application. The method 300 is optionally appliable to the system as shown in Fig. 1, but is not limited thereto. The method 300 includes at least part of the following contents.

In 310, the network device receives capability information of a maximum bandwidth supported by a terminal device that is sent by the terminal device.

In 320, the network device configures a bandwidth part (BWP) list and configuration information for the terminal device according to the capability information of the maximum bandwidth supported by the terminal device, the BWP list including at least one BWP, and the configuration information indicating a BWP for transmitting data in the BWP list. Optionally, the BWP list includes a maximum bandwidth of the at least one BWP which is less than or equal to the capability information of the maximum bandwidth supported by the terminal device.

The method 300 further includes:
the network device receives indication information sent by the terminal device, the indication information being used for indicating a frequency range to be used by the terminal device and/or frequency priority information.

Optionally, the network device configures the BWP list for the terminal device according to the capability information of the maximum bandwidth supported by the terminal device and the indication information.

Optionally, the network device configures the BWP list and the configuration information for the terminal device through radio resource control (RRC) dedicated signaling.

For example, as shown in Fig. 4, the terminal device has a high rate, and the network device configures a relatively large bandwidth for the terminal device in the available bandwidth (Overall Carrier), BWP 1.

For another example, as shown in FIG. 5, the terminal device has a very low rate, and the network device configures a relatively small bandwidth for the terminal device in the Overall Carrier, BWP 2.

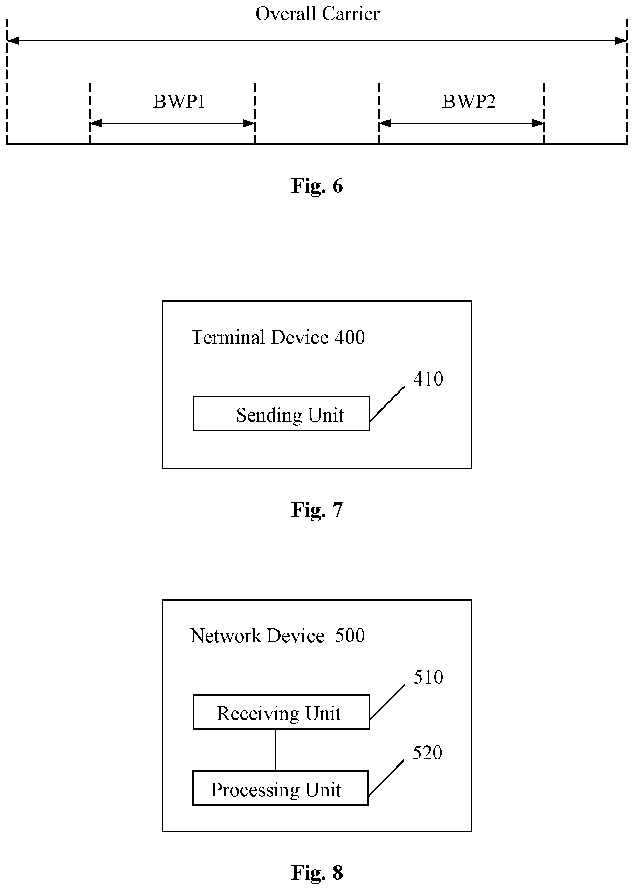

For another example, as shown in FIG. 6, if the terminal device supports a high rate or operates in a carrier aggregation (CA) mode, multiple BWPs, BWP 1 and BWP 2 may be configured.

It should be understood that the description in the wireless communication method 300 may refer to the related description of the corresponding steps in the wireless communication method 200, which will not be repeated here for the sake of brevity.

Therefore, in the wireless communication method according to the embodiments of the present application, the terminal device reports the capability information of the maximum bandwidth supported by itself, and the network device can configure, for the terminal device, the bandwidth part for transmitting data according to the capability information of the maximum bandwidth supported by the terminal device. Accordingly, the terminal device can perform data transmission within a proper bandwidth range, thereby achieving the purpose of power saving.

Furthermore, the terminal device reports indication information being indicative of the frequency range as preferentially used and/or the frequency priority information, such that the network device can configure, for the terminal device, the bandwidth part for transmitting data according to the capability information of the maximum bandwidth supported by the terminal device as well as the frequency range as preferentially used and/or the frequency priority information. Accordingly, the terminal device can perform data transmission within a proper bandwidth range, thereby achieving the purpose of power saving.

Fig. 7 is a block diagram illustrating a terminal device 400 according to an embodiment of the application. As shown in Fig. 7, the terminal device 400 includes:
a sending unit 410, configured to send capability information of a maximum bandwidth supported by the terminal device to a network device.

The sending unit 410 is further configured to send indication information to the network device, the indication information being used for indicating a frequency range preferentially used by the terminal device and/or frequency priority information.

The terminal device 400 further includes:
a receiving unit 420, configured to receive a bandwidth part (BWP) list and configuration information sent by the network device, the BWP list including at least one BWP, and optionally a maximum bandwidth of the at least one BWP is less than or equal to the capability information of the maximum bandwidth supported by the terminal device, and the configuration information indicating a BWP for transmitting data in the BWP list; and
a processing unit 430, configured to select a BWP from the BWP list for data transmission based on the configuration information.

It should be understood that the above and other operations and/or functions of each module in the terminal device 400 according to the embodiment of the present application are respectively to implement the corresponding process of the terminal device in the method 200 of Fig. 2, which will not be repeated here for the sake of brevity.

Fig. 8 is a block diagram illustrating a network device 500 according to an embodiment of the application. As shown in Fig. 8, the network device 500 includes:
a receiving unit 510, configured to receive capability information of a maximum bandwidth supported by a terminal device that is sent by the terminal device; and
a processing unit 520, configured to configure a bandwidth part (BWP) list and configuration information for the terminal device according to the capability information of the maximum bandwidth supported by the terminal device, the BWP list including at least one BWP, and a optionally maximum bandwidth of the at least one BWP is less than or equal to the capability information of the maximum bandwidth supported by the terminal device, and the configuration information indicating a BWP for transmitting data in the BWP list.

The receiving unit 510 is further configured to receive indication information sent by the terminal device, the indication information being used for indicating a frequency range preferentially used by the terminal device and/or frequency priority information;
the processing unit 520 is further configured to configure the BWP list for the terminal device according to the capability information of the maximum bandwidth supported by the terminal device and the indication information.

Optionally, the processing unit 520 is further configured to configure the BWP list and the configuration information for the terminal device through radio resource control (RRC) dedicated signaling.

It should be understood that the above and other operations and/or functions of each module in the network device 500 according to the embodiment of the present application are respectively to implement the corresponding process of the network device in the method 300 of Fig. 3, which will not be repeated here for the sake of brevity.

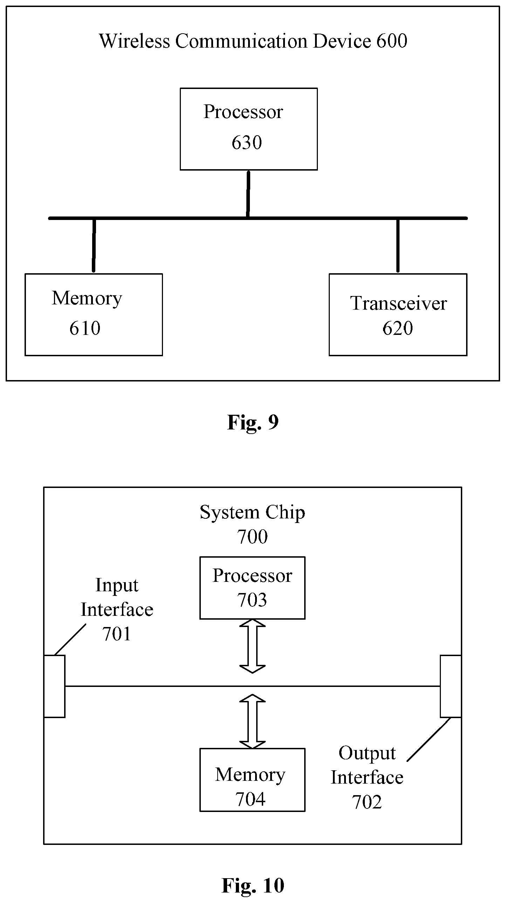

Fig. 9 illustrates a schematic block diagram of a wireless communication device 600 according to an embodiment of the present application. The device 600 includes:
a memory 610, configured to store a program including codes; and
a transceiver 620, configured to communicate with other devices.

The processor 630 is configured to execute program codes in the memory 610.

Optionally, the transceiver 620 is configured to perform specific signal transceiving under the driving of the processor 630.

Optionally, when the codes are executed, the processor 630 may also implement various operations performed by the terminal device in the method 200 of Fig. 2, which will not be repeated here for the sake of brevity. Accordingly, the device 600 may be a terminal device, for example, a mobile phone.

Optionally, when the codes are executed, the processor 630 may also implement various operations performed by the network device in the method 300 of Fig. 3, which will not be repeated here for the sake of brevity. Accordingly, the device 600 may be a network device, for example, a base station.

It should be understood that, in the embodiment of the present application, the processor 630 may be a Central Processing Unit (CPU), and the processor 630 may also be a general-purpose processor, a digital signal processor (DSP), an application-specific integrated circuits (ASIC), a field programmable gate array (FPGA) or other programmable logic devices, discrete gates, transistor logic devices, discrete hardware components or the like. The general-purpose processor may be a microprocessor, or the processor may be any conventional processor or the like.

The memory 610 may include a read-only memory and a random access memory, and provide instructions and data to the processor 630. Apart of the memory 610 may further include a non-volatile random access memory. For example, the memory 610 may also store device type information.

The transceiver 620 may be configured to implement signal transmission and reception functions, such as a frequency modulation and demodulation function or an up-conversion and down-conversion function.

In the implementation process, at least one step of the above method may be completed by an integrated logic circuit of hardware in the processor 630, or the integrated logic circuit may complete the at least one step under the driving of instructions in a software form. Therefore, the wireless communication device 600 may be a chip or a chipset. The steps of the method disclosed in combination with the embodiments of the present application may be directly implemented by a hardware processor, or may be performed by a combination of hardware and software modules in the processor. The software module may be located in a mature storage medium such as a random access memory, a flash memory, a read-only memory, a programmable read-only memory, an electrically erasable programmable memory, a register, and the like. The storage medium is located in a memory, and the processor 630 reads information in the memory and completes the steps of the foregoing method in combination with its hardware. To avoid repetition, it will not be described in detail here.

Fig. 10 is a schematic structural diagram of a system chip 700 according to an embodiment of the present application. The system chip 700 shown in Fig. 10 includes an input interface 701, an output interface 702, a processor 703, and a memory 704 which may be connected through internal communication connecting lines. The processor 703 is configured to execute codes in the memory 704.

Optionally, when the codes are executed, the processor 703 implements the method executed by the terminal device in the method embodiments, which will be not repeated here for brevity.

Optionally, when the codes are executed, the processor 703 implements the method executed by the network device in the method embodiments, which will be not repeated here for brevity.

In the above embodiments, it may be implemented in whole or in part by software, hardware, firmware, or any combination thereof. When implemented in software, it may be implemented in whole or in part in the form of a computer program product. The computer program product includes one or more computer instructions. When the computer program instructions are loaded and executed on a computer, the processes or functions according to the embodiments of the present application are wholly or partially generated. The computer may be a general-purpose computer, a special-purpose computer, a computer network, or other programmable device. The computer instructions may be stored in a computer-readable storage medium or transmitted from one computer-readable storage medium to another computer-readable storage medium, for example, the computer instructions may be transmitted from a website site, computer, server, or data center through a cable (e.g., coaxial cable, fiber optic, digital subscriber line (DSL)) or wirelessly (e.g., infrared, wireless, microwave and the like) to another website site, computer, server, or data center. The computer-readable storage medium may be any available medium that can be accessed by a computer or a data storage device such as a server, a data center, and the like that includes one or more available medium integrations. The available medium may be a magnetic medium (e.g., a floppy disk, a hard disk, a magnetic tape), an optical medium (e.g., a DVD), or a semiconductor medium (e.g., a solid state disk (SSD)).

It should be understood that, in the various embodiments of the present application, the size of the sequence numbers of the above processes does not mean the order of execution. The execution order of each process should be determined by its function and internal logic, and should not constitute any limitation to the implementation process according to the embodiments of the application.

Those skilled in the art can clearly understand that, for the convenience and brevity of the description, the specific working processes of the systems, devices, and units described above may refer to the corresponding processes in the foregoing method embodiments, and are not repeated here.

The above is only a specific implementation of the application, but the protection scope of the application is not limited thereto. Any person skilled in the art can easily think of changes or replacements within the technical scope disclosed in this application, which shall fall within the protection scope of the application. Therefore, the protection scope of the application shall be accordance with the protection scope of claims.

## Claims

1. A wireless communication method, comprising:
sending (210), by a terminal device, capability information of a maximum bandwidth supported by the terminal device to a network device; and
receiving, by the terminal device, a bandwidth part, BWP, list and configuration information sent by the network device, the BWP list including at least one BWP, and the configuration information indicating a BWP for transmitting data in the BWP list,
**characterized in** further comprising:
sending, by the terminal device, indication information to the network device, the indication information being used for indicating a frequency range to be used by the terminal device and/or frequency priority information.

2. The method according to claim 1, further comprising:
performing data transmission on the BWP for transmitting data in the BWP list indicated in the configuration information.

3. The method according to claim 1, further comprising:
selecting, by the terminal device, a BWP from the BWP list for data transmission based on the configuration information.

4. The method according to claim 2 or 3, wherein a maximum bandwidth of the at least one BWP is less than or equal to the capability information of the maximum bandwidth supported by the terminal device.

5. A wireless communication method, comprising:
receiving (310), by a network device, capability information of a maximum bandwidth supported by a terminal device that is sent by the terminal device; and
configuring (320), by the network device, a bandwidth part, BWP, list and configuration information for the terminal device according to the capability information of the maximum bandwidth supported by the terminal device, the BWP list including at least one BWP, and the configuration information indicating a BWP for transmitting data in the BWP list,
**characterized in** further comprising:
receiving, by the network device, indication information sent by the terminal device, the indication information being used for indicating a frequency range to be used by the terminal device and/or frequency priority information;
wherein the configuring, by the network device, a bandwidth part, BWP, list for the terminal device according to the capability information of the maximum bandwidth supported by the terminal device comprises:
configuring, by the network device, the BWP list for the terminal device according to the capability information of the maximum bandwidth supported by the terminal device and the indication information.

6. The method according to claim 5, wherein the configuring, by the network device, a bandwidth part, BWP, list for the terminal device according to the capability information of the maximum bandwidth supported by the terminal device comprises:
configuring, by the network device, the BWP list and the configuration information for the terminal device through radio resource control, RRC, dedicated signaling.

7. A terminal device, comprising:
a sending unit (410), configured to send capability information of a maximum bandwidth supported by the terminal device to a network device; and
a receiving unit, configured to receive a bandwidth part, BWP, list and configuration information sent by the network device, the BWP list including at least one BWP, and the configuration information indicating a BWP for transmitting data in the BWP list,
**characterized in that** the sending unit (410) is further configured to send indication information to the network device, the indication information being used for indicating a frequency range to be used by the terminal device and/or frequency priority information.

8. The terminal device according to claim 7, wherein the terminal device further comprises:
a processing unit, configured to perform data transmission on the BWP for transmitting data in the BWP list indicated in the configuration information.

9. The terminal device according to claim 7, wherein the terminal device further comprises:
a processing unit, configured to select a BWP from the BWP list for data transmission based on the configuration information.

10. A network device, comprising:
a receiving unit (510), configured to receive capability information of a maximum bandwidth supported by a terminal device that is sent by the terminal device; and
a processing unit (520), configured to configure a bandwidth part, BWP, list and configuration information for the terminal device according to the capability information of the maximum bandwidth supported by the terminal device, the BWP list including at least one BWP, and the configuration information indicating a BWP for transmitting data in the BWP list,
**characterized in that** the receiving unit (510) is further configured to receive indication information sent by the terminal device, the indication information being used for indicating a frequency range to be used by the terminal device and/or frequency priority information;
the processing unit (520) is further configured to configure the BWP list for the terminal device according to the capability information of the maximum bandwidth supported by the terminal device and the indication information.

11. The network device according to claim 10, wherein the processing unit (520) is further configured to configure the BWP list and the configuration information for the terminal device through radio resource control, RRC, dedicated signaling.

## Patentansprüche

1. Drahtloses Kommunikationsverfahren, das Folgendes umfasst:
Senden (210) durch eine Endgerätvorrichtung von Fähigkeitsinformationen einer maximalen Bandbreite, die durch die Endgerätvorrichtung unterstützt wird, an eine Netzvorrichtung; und
Empfangen durch die Endgerätvorrichtung einer Bandbreitenabschnitts-Liste, BWP-Liste, und von Konfigurationsinformationen, die durch die Netzvorrichtung gesendet werden, wobei die BWP-Liste mindestens einen BWP enthält und die Konfigurationsinformationen einen BWP zum Senden von Daten in der BWP-Liste angeben,
**dadurch gekennzeichnet, dass** es ferner Folgendes umfasst:
Senden durch die Endgerätvorrichtung von Angabeinformationen an die Netzvorrichtung, wobei die Angabeinformationen zum Angeben eines Frequenzbereichs, der durch die Endgerätvorrichtung zu verwenden ist, und/oder von Frequenzprioritätsinformationen verwendet werden.

2. Verfahren nach Anspruch 1, das ferner Folgendes umfasst:
Ausführen einer Datenübertragung auf dem BWP zum Senden von Daten in der BWP-Liste, das in den Konfigurationsinformationen angegeben ist.

3. Verfahren nach Anspruch 1, das ferner Folgendes umfasst:
Auswählen durch die Endgerätvorrichtung eines BWP von der BWP-Liste für eine Datenübertragung anhand der Konfigurationsinformationen.

4. Verfahren nach Anspruch 2 oder 3, wobei eine maximale Bandbreite des mindestens einen BWP kleiner als die Fähigkeitsinformationen der maximalen Bandbreite, die durch die Endgerätvorrichtung unterstützt wird, oder gleich diesen ist.

5. Drahtloses Kommunikationsverfahren, das Folgendes umfasst:
Empfangen (310) durch eine Netzvorrichtung von Fähigkeitsinformationen einer maximalen Bandbreite, die durch eine Endgerätvorrichtung unterstützt wird, die durch die Endgerätvorrichtung gesendet werden; und
Konfigurieren (320) durch die Netzvorrichtung einer Bandbreitenabschnitts-Liste, BWP-Liste, und von Konfigurationsinformationen für die Endgerätvorrichtung gemäß den Fähigkeitsinformationen der maximalen Bandbreite, die durch die Endgerätvorrichtung unterstützt wird, wobei die BWP-Liste mindestens einen BWP enthält und die Konfigurationsinformationen einen BWP zum Senden von Daten in der BWP-Liste angeben,
**dadurch gekennzeichnet, dass** es ferner Folgendes umfasst:
Empfangen durch die Netzvorrichtung von Angabeinformationen, die durch die Endgerätvorrichtung gesendet werden, wobei die Angabeinformationen zum Angeben eines Frequenzbereichs, der durch die Endgerätvorrichtung zu verwenden ist, und/oder von Frequenzprioritätsinformationen verwendet werden;
wobei das Konfigurieren durch die Netzvorrichtung einer Bandbreitenabschnitts-Liste, BWP-Liste, für die Endgerätvorrichtung gemäß den Fähigkeitsinformationen der maximalen Bandbreite, die durch die Endgerätvorrichtung unterstützt wird, Folgendes umfasst:
Konfigurieren durch die Netzvorrichtung der BWP-Liste für die Endgerätvorrichtung gemäß den Fähigkeitsinformationen der maximalen Bandbreite, die durch die Endgerätvorrichtung unterstützt wird, und den Angabeinformationen.

6. Verfahren nach Anspruch 5, wobei das Konfigurieren durch die Netzvorrichtung einer Bandbreitenabschnitts-Liste, BWP-Liste, für die Endgerätvorrichtung gemäß den Fähigkeitsinformationen der maximalen Bandbreite, die durch die Endgerätvorrichtung unterstützt wird, Folgendes umfasst:
Konfigurieren durch die Netzvorrichtung der BWP-Liste und der Konfigurationsinformationen für die Endgerätvorrichtung durch eine für eine Funkbetriebsmittelsteuerung, RRC, bestimmte Signalisierung.

7. Endgerätvorrichtung, die Folgendes umfasst:
eine Sendeeinheit (410), die konfiguriert ist, Fähigkeitsinformationen einer maximalen Bandbreite, die durch die Endgerätvorrichtung unterstützt wird, an eine Netzvorrichtung zu senden; und
eine Empfangseinheit, die konfiguriert ist, eine Bandbreitenabschnitts-Liste, BWP-Liste, und Konfigurationsinformationen, die durch die Netzvorrichtung gesendet werden, zu empfangen, wobei die BWP-Liste mindestens einen BWP enthält und die Konfigurationsinformationen einen BWP zum Senden von Daten in der BWP-Liste angeben,
**dadurch gekennzeichnet, dass** die Sendeeinheit (410) ferner konfiguriert ist, Angabeinformationen an die Netzvorrichtung zu senden, wobei die Angabeinformationen zum Angeben eines Frequenzbereichs, der durch die Endgerätvorrichtung zu verwenden ist, und/oder von Frequenzprioritätsinformationen verwendet werden.

8. Endgerätvorrichtung nach Anspruch 7, wobei die Endgerätvorrichtung ferner Folgendes umfasst:
eine Verarbeitungseinheit, die konfiguriert ist, eine Datenübertragung auf dem BWP zum Senden von Daten in der BWP-Liste, das in den Konfigurationsinformationen angegeben ist, auszuführen.

9. Endgerätvorrichtung nach Anspruch 7, wobei die Endgerätvorrichtung ferner Folgendes umfasst:
eine Verarbeitungseinheit, die konfiguriert ist, ein BWP von der BWP-Liste für eine Datenübertragung anhand der Konfigurationsinformationen auszuwählen.

10. Netzvorrichtung, die Folgendes umfasst:
eine Empfangseinheit (510), die konfiguriert ist, Fähigkeitsinformationen einer maximalen Bandbreite, die durch eine Endgerätvorrichtung unterstützt wird, die durch die Endgerätvorrichtung gesendet werden, zu empfangen; und
eine Verarbeitungseinheit (520), die konfiguriert ist, eine Bandbreitenabschnitts-Liste, BWP-Liste, und Konfigurationsinformationen für die Endgerätvorrichtung gemäß den Fähigkeitsinformationen der maximalen Bandbreite, die durch die Endgerätvorrichtung unterstützt wird, zu konfigurieren, wobei die BWP-Liste mindestens einen BWP enthält und die Konfigurationsinformationen einen BWP zum Senden von Daten in der BWP-Liste angeben,
**dadurch gekennzeichnet, dass** die Empfangseinheit (510) ferner konfiguriert ist, Angabeinformationen, die durch die Endgerätvorrichtung gesendet werden, zu empfangen, wobei die Angabeinformationen zum Angeben eines Frequenzbereichs, der durch die Endgerätvorrichtung zu verwenden ist, und/oder von Frequenzprioritätsinformationen verwendet werden;
wobei die Verarbeitungseinheit (520) ferner konfiguriert ist, die BWP-Liste für die Endgerätvorrichtung gemäß den Fähigkeitsinformationen der maximalen Bandbreite, die durch die Endgerätvorrichtung unterstützt wird, und den Angabeinformationen zu konfigurieren.

11. Netzvorrichtung nach Anspruch 10, wobei die Verarbeitungseinheit (520) ferner konfiguriert ist, die BWP-Liste und die Konfigurationsinformationen für die Endgerätvorrichtung durch eine für eine Funkbetriebsmittelsteuerung, RRC, bestimmte, Signalisierung zu konfigurieren.

## Revendications

1. Procédé de communication sans fil, comprenant :
l'émission (210), par un dispositif terminal, à destination d'un dispositif de réseau, d'informations de capacité d'une bande passante maximale prise en charge par le dispositif terminal ; et
la réception, par le dispositif terminal, d'une liste de parties de bande passante, BWP, et d'informations de configuration émises par le dispositif de réseau, la liste de BWP comportant au moins une BWP et les informations de configuration indiquant une BWP pour la transmission de données dans la liste de BWP,
**caractérisé en ce qu'**il comprend en outre :
l'émission, par le dispositif terminal, à destination du dispositif de réseau, d'informations d'indication, les informations d'indication servant à indiquer une plage de fréquences à utiliser par le dispositif terminal et/ou des informations de priorité de fréquence.

2. Procédé selon la revendication 1, comprenant en outre :
la réalisation d'une transmission de données sur la BWP pour la transmission de données dans la liste de BWP indiquée dans les informations de configuration.

3. Procédé selon la revendication 1, comprenant en outre :
la sélection, par le dispositif terminal, d'une BWP dans la liste de BWP pour la transmission de données sur la base des informations de configuration.

4. Procédé selon la revendication 2 ou 3, dans lequel une bande passante maximale de l'au moins une BWP est inférieure ou égale aux informations de capacité de la bande passante maximale prise en charge par le dispositif terminal.

5. Procédé de communication sans fil, comprenant :
la réception (310), par un dispositif de réseau, d'informations de capacité d'une bande passante maximale prise en charge par un dispositif terminal qui sont émises par le dispositif terminal ; et
la configuration (320), par le dispositif de réseau, d'une liste de parties de bande passante, BWP, et d'informations de configuration pour le dispositif terminal selon les informations de capacité de la bande passante maximale prise en charge par le dispositif terminal, la liste de BWP comportant au moins une BWP et les informations de configuration indiquant une BWP pour la transmission de données dans la liste de BWP,
**caractérisé en ce qu'**il comprend en outre :
la réception, par le dispositif de réseau, d'informations d'indication émises par le dispositif terminal, les informations d'indication servant à indiquer une plage de fréquences à utiliser par le dispositif terminal et/ou des informations de priorité de fréquence ;
la configuration, par le dispositif de réseau, d'une liste de parties de bande passante, BWP, pour le dispositif terminal selon les informations de capacité de la bande passante maximale prise en charge par le dispositif terminal comprenant :
la configuration, par le dispositif de réseau, de la liste de BWP pour le dispositif terminal selon les informations de capacité de la bande passante maximale prise en charge par le dispositif terminal et les informations d'indication.

6. Procédé selon la revendication 5, dans lequel la configuration, par le dispositif de réseau, d'une liste de parties de bande passante, BWP, pour le dispositif terminal selon les informations de capacité de la bande passante maximale prise en charge par le dispositif terminal comprend :
la configuration, par le dispositif de réseau, de la liste de BWP et des informations de configuration pour le dispositif terminal au moyen d'une signalisation dédiée de type commande des ressources radio, RRC.

7. Dispositif terminal, comprenant :
une unité émettrice (410), configurée pour émettre, à destination d'un dispositif de réseau, des informations de capacité d'une bande passante maximale prise en charge par le dispositif terminal ; et
une unité réceptrice, configurée pour recevoir une liste de parties de bande passante, BWP, et des informations de configuration émises par le dispositif de réseau, la liste de BWP comportant au moins une BWP et les informations de configuration indiquant une BWP pour la transmission de données dans la liste de BWP,
**caractérisé en ce que** l'unité émettrice (410) est configurée en outre pour émettre, à destination du dispositif de réseau, des informations d'indication, les informations d'indication servant à indiquer une plage de fréquences à utiliser par le dispositif terminal et/ou des informations de priorité de fréquence.

8. Dispositif terminal selon la revendication 7, le dispositif terminal comprenant en outre :
une unité de traitement, configurée pour réaliser une transmission de données sur la BWP pour la transmission de données dans la liste de BWP indiquée dans les informations de configuration.

9. Dispositif terminal selon la revendication 7, le dispositif terminal comprenant en outre :
une unité de traitement, configurée pour sélectionner une BWP dans la liste de BWP pour la transmission de données sur la base des informations de configuration.

10. Dispositif de réseau, comprenant :
une unité réceptrice (510), configurée pour recevoir des informations de capacité d'une bande passante maximale prise en charge par un dispositif terminal qui sont émises par le dispositif terminal ; et
une unité de traitement (520), configurée pour configurer une liste de parties de bande passante, BWP, et des informations de configuration pour le dispositif terminal selon les informations de capacité de la bande passante maximale prise en charge par le dispositif terminal, la liste de BWP comportant au moins une BWP et les informations de configuration indiquant une BWP pour la transmission de données dans la liste de BWP,
**caractérisé en ce que** l'unité de réception (510) est configurée en outre pour recevoir des informations d'indication émises par le dispositif terminal, les informations d'indication servant à indiquer une plage de fréquences à utiliser par le dispositif terminal et/ou des informations de priorité de fréquence ;
l'unité de traitement (520) est configurée en outre pour configurer la liste de BWP pour le dispositif terminal selon les informations de capacité de la bande passante maximale prise en charge par le dispositif terminal et les informations d'indication.

11. Dispositif de réseau selon la revendication 10, dans lequel l'unité de traitement (520) est configurée en outre pour configurer la liste de BWP et les informations de configuration pour le dispositif terminal au moyen d'une signalisation dédiée de type commande des ressources radio, RRC.
